(19) **Europäisches Patentamt**
**European Patent Office**
**Office européen des brevets**

(11) **EP 0 621 162 B1**

(12) **EUROPEAN PATENT SPECIFICATION**

(45) Date of publication and mention
of the grant of the patent:
**25.08.2004 Bulletin 2004/35**

(51) Int Cl.⁷: **B60T 8/00**

(21) Application number: **94106258.0**

(22) Date of filing: **21.04.1994**

(54) **Method of finding control point in anti-lock brake system for vehicles**

Verfahren zum Auffinden eines Steuerungspunktes in einem Antiblockiersystem für Kraftfahrzeuge

Méthode pour trouver un point de commande d'un système de freinage antibloquant pour véhicules

(84) Designated Contracting States:
**DE FR GB IT SE**

(30) Priority: **21.04.1993 JP 13150493**
**25.08.1993 JP 24763293**

(43) Date of publication of application:
**26.10.1994 Bulletin 1994/43**

(73) Proprietor: **JAPAN ELECTRONICS INDUSTRY, LTD.**
**Ikuno-ku Osaka (JP)**

(72) Inventor: **Miyazaki, Nagao,**
**c/o Japan Electronics Ind. Ltd.**
**Ikuno-ku, Osaka (JP)**

(74) Representative: **Strehl Schübel-Hopf & Partner**
**Maximilianstrasse 54**
**80538 München (DE)**

(56) References cited:
**EP-A- 0 327 946**    **EP-A- 0 363 570**
**GB-A- 2 121 495**    **US-A- 4 881 784**

## Description

### FIELD OF THE INVENTION

An embodiment useful to understand the invention relates to a method of controlling an anti-lock brake system for vehicles which prevents the locking of the wheels upon emergency braking of a vehicle, said method being characterized in that it uses the road surface friction force F or road surface friction coefficient μ instead of slip factor used in the prior art, so as to control the system.

The present invention relates to a method of finding a control point in an anti-lock brake system (ABS) for vehicles which prevents the locking of the wheels upon emergency braking of a vehicle according to claim 1. This method makes an errorless ABS control decision by using a road surface friction force detecting sensor or a road surface friction coefficient detecting sensor.

### BACKGROUND OF THE INVENTION

Method of Controlling Anti-Lock Brake System for Vehicles

Generally, conventional anti-lock brake systems for vehicles, e.g., automobiles, automatically control the brake operation such that the slip ratio falls in a given range on the basis of the vehicle speed and wheel speed (e.g., Japanese Patent Publication No. 30585/1984 and Japanese Patent Application Laid-Open Specification No. 61354/1985). The relation between road surface friction coefficient and slip ratio can vary depending on the road surface conditions and for this reason said systems sometimes fail to provide a maximum brake pressure, in which case a minimum brake distance cannot be obtained. Further, since the vehicle speed is a value estimated from the wheel speed, there is a problem on precision in the control of slip ratio. To accurately know the vehicle speed, there is a need for a complicated device, such as a ground-relative speed sensor (e.g., Japanese Patent Application Laid-Open Specification No. 64861/1988) or a vehicle deceleration sensor (e.g., Japanese Patent Application Laid-Open Specification No. 170157/1988). In the device described in Japanese Patent Application Laid-Open Specification No. 25169/1988, the torque of road surface friction force (tire torque) acting on the wheel is found by calculation from wheel angular acceleration and brake liquid pressure and that value of the tire torque at which the tire torque starts to decrease during the increase of the brake liquid pressure is employed as one of the factors for deciding the conditions immediately before the locking of the wheel. However, in this device, the tire torque is indirectly found by calculation from the wheel angular acceleration and brake liquid pressure and on account of the presence of uncertain constants such as brake efficiency and the moment of inertia of the wheel, there is a problem on precision. Further, since the pneumatic pressure in the tire of the wheel and the distance from the ground to the vehicle vary, there is also a problem that the ratio between the road surface friction force and the tire torque is not always maintained at a constant value.

In order to eliminate the drawback inherent in the conventional device described above, the present applicant has previously proposed, in Japanese Patent Application No. 197809/1989 (Japanese Patent Application Laid-open Specification No. 220056/1991), an anti-lock brake system for vehicles, comprising a strain gauge disposed in the vicinity of the axle, a load surface friction force detecting device having means for directly measuring shearing strains in the vicinity of the axle, and a vertical load detecting device, and means whereby in response to an output signal from a road surface friction coefficient detecting device having means for arithmetically processing detection signals from said two devices, the brake pressure is increased when the road surface friction force or road surface friction coefficient increases with increasing brake pressure or it is decreased when the road surface friction force or road surface friction coefficient decreases despite increasing brake pressure, and if the road surface friction force or road surface friction coefficient decreases with decreasing brake pressure, the brake pressure is increased again, such operations being repeated.

In the case where anti-lock brake control for vehicles is effected by using said system, it has been found that owing to disturbance sources such as vibrations of the tire and road surface during brake operation and the suspension, the signal value of the road surface friction force F or road surface friction coefficient μ sometimes fluctuates in a certain range, causing the accurate control start point to be mistaken.

Method of Detecting Control Point in ABS

Generally, conventional anti-lock brake systems for vehicles, e.g., automobiles, automatically control the brake operation such that the slip ratio falls in a given range on the basis of the vehicle speed and wheel speed (e.g., Japanese Patent Publication No. 30585/1984 and Japanese Patent Application Laid-Open Specification No. 61354/1985). The relation between road surface friction coefficient and slip ratio can vary depending on the road surface conditions and for this reason said systems sometimes fail to provide a maximum brake pressure, in which case a minimum brake distance cannot be obtained. Further, since the vehicle speed is a value estimated from the wheel speed, there is a problem on precision in the control of slip ratio. To accurately know the vehicle speed, there is a need for a complicated device, such as a ground-relative speed sensor (e.g., Japanese Patent Application Laid-Open Specification No. 64861/1988) or a vehicle deceleration sensor (e.g., Japanese Patent Application Laid-Open Specification No. 170157/1988). In the device described in Japanese Patent Application Laid-Open Specification No. 25169/1988, the torque of road surface friction force (tire torque) acting on the wheel is found by calculation from wheel angular acceleration and brake liquid pressure and that value of the tire torque at which the tire torque starts to decrease during the increase of the brake liquid pressure is employed as one of the factors for deciding the conditions immediately before the locking of the wheel. However, in this device, the tire torque is indirectly found by calculation from the wheel angular acceleration and brake liquid pressure and on account of the presence of uncertain constants such as brake efficiency and the moment of inertia of the wheel, there is a problem on precision. Further, since the pneumatic pressure in the tire of the wheel and the distance from the ground to the vehicle vary, there is also a problem that the ratio between the road surface friction force and the tire torque is not always maintained at a constant value.

In order to eliminate the drawback inherent in the conventional device described above, the present applicant has previously proposed, in Japanese Patent Application No. 197809/1989 (Japanese Patent Application Laid-open Specification No. 220056/1991), an anti-lock brake system for vehicles, comprising a strain gauge disposed in the vicinity of the axle, a load surface friction force detecting device having means for directly measuring shearing strains in the vicinity of the axle, and a vertical load detecting device, and means whereby in response to an output signal from a road surface friction coefficient detecting device having means for arithmetically processing detection signals from said two devices, the brake pressure is increased when the road surface friction force or road surface friction coefficient increases with increasing brake pressure or it is decreased when the road surface friction force or road surface friction coefficient decreases despite increasing brake pressure, and if the road surface friction force or road surface friction coefficient decreases with decreasing brake pressure, the brake pressure is increased again, such operations being repeated.

In the case where anti-lock brake control for vehicles is effected by using said system, it has been found that owing to crosstalks such as brake torque contained in sensor signals, the accurate control start point can often be mistaken.

GB-A-2 121 495 discloses an arrangement for continually monitoring the braking forces on a wheeled vehicle. Thereby, a method is achieved which detects and separates wheel drag and braking forces suitable to be incorporated into braking control systems such as ABS.

## SUMMARY OF THE INVENTION

Method of Controlling Anti-Lock Brake System for Vehicles

In view of the problem inherent in said anti-lock brake system for vehicles according to the prior art described above, an embodiment useful to understand the present invention has for its object the provision of a method of controlling an anti-lock brake system for vehicles, said method being improved to effect stabilized control by eliminating disturbance sources in the vicinity of the optimum control start point concomitant with the increase of the signal value of the road surface friction force F or road surface friction coefficient $\mu$ or by confining disturbance sources associated with the optimum control start point in a range of given width, said method preventing the brake pressure from being unnecessarily decreased.

The solution described in accordance with this embodiment is a method of controlling an anti-lock brake system for vehicles wherein when a vehicle having an anti-lock brake system mounted thereon has the emergency brake applied thereto, a change in the road surface friction force or road surface friction coefficient due to the increased brake pressure is detected by a road surface friction force detecting device or a road surface friction coefficient detecting device,

said method being characterized in that to decide the optimum control start point concomitant with the increase of the signal value of the road surface friction force F or road surface friction coefficient $\mu$ detected by the road surface friction force detecting device or road surface friction coefficient detecting device, use is made of means for eliminating disturbance sources which impede such decision.

Eliminating disturbance sources in the vicinity of the optimum control start point concomitant with the increase of the signal value of the road surface friction force F or road surface friction coefficient $\mu$ or confining disturbance sources associated with the optimum control start point in a range of given width ensures that there is no unnecessary decrease in brake pressure and that efficient and stabilized control is effected.

Said embodiment further relates to a method of controlling an anti-lock brake system for vehicles, wherein when a vehicle having an anti-lock brake system mounted thereon has the emergency brake applied thereto, a change in the road surface friction force or road surface friction coefficient due to the increased brake pressure is detected by a road surface friction force detecting device or a road surface friction coefficient detecting device,

said method being characterized in that the optimum control start point concomitant with the increase of the signal value of the road surface friction force F or road surface friction coefficient $\mu$ due to the increased brake pressure detected by the road surface friction force detecting device or road surface friction coefficient detecting device is decided by a drop in the wheel speed, that is, by using the wheel speed $\omega$ or $d\omega/dt$, and then from the point where the specified value of control by F or $\mu$ or by $dF/dt$ or $\mu/dt$ is reached, the brake pressure is shifted from the pressure increasing mode to the pressure retaining or decreasing mode, so as to eliminate disturbance sources.

A drop in the wheel speed is decided by the wheel speed $\omega$ or $d\omega/dt$ and the optimum control start point concomitant with the increase of the signal value of the road surface friction force F or road surface friction coefficient $\mu$ is specified, thereby providing the optimum control start point free from the influences of disturbance sources during ABS control.

Said embodiment further relates to a method of controlling an anti-lock brake system for vehicles wherein when a vehicle having an anti-lock brake system mounted thereon has the emergency brake applied thereto, a change in the road surface friction force or road surface friction coefficient due to the increased brake pressure is detected by a road surface friction force detecting device or a road surface friction coefficient detecting device,

said method being characterized in that the optimum control start point concomitant with the increase of the signal value of the road surface friction force F or road surface friction coefficient $\mu$ due to the increased brake pressure detected by the road surface friction force detecting device or road surface friction coefficient detecting device is decided by a drop in the vehicle acceleration decided by $dV/dt$ using an acceleration sensor, and then from the point where the specified value of control by F or $\mu$ or by $dF/dt$ or $d\mu/dt$ is reached, the brake pressure is shifted from the pressure increasing mode to the pressure retaining or decreasing mode, so as to eliminate disturbance sources.

A drop in the vehicle acceleration is decided by $dV/dt$ using an acceleration sensor and then the optimum control start point concomitant with the increase of the road surface friction force F or road surface friction coefficient $\mu$ is designated, thereby providing the optimum control start point free from the influences of disturbance sources during ABS control.

Said embodiment further relates to a method of controlling an anti-lock brake system for vehicles wherein when a vehicle having an anti-lock brake system mounted thereon has the emergency brake applied thereto, a change in the road surface friction force or road surface friction coefficient due to the increased brake pressure is detected by a road surface friction force detecting device or a road surface friction coefficient detecting device,

said method being characterized in that the optimum control start point concomitant with the increase of the signal value of the road surface friction force F or road surface friction coefficient $\mu$ detected by the road surface friction force detecting device or road surface friction coefficient detecting device is decided by both the wheel speed $\omega$ or $d\omega/dt$ and $dV/dt$, and then from the point where the specified value of control by F or $\mu$ or by $dF/dt$ or $\mu/dt$ is reached, the brake pressure is shifted from the pressure increasing mode to the pressure retaining or decreasing mode, so as to eliminate disturbance sources.

A drop in the wheel speed is decided by the wheel speed $\omega$ or $d\omega/dt$ and a drop in the vehicle acceleration is decided by $dV/dt$ using an acceleration sensor and then the optimum control start point concomitant with the increase of the road surface friction force F or road surface friction coefficient $\mu$ is designated, thereby providing the optimum control start point free from the influences of disturbance sources during ABS control.

A drop in the wheel speed during brake operation is detected by the specified value of $\omega$ or by $d\omega/dt$ so as to provide a control start point or a drop in the vehicle speed is detected by $dV/dt$ so as to provide a control start point or detected by both to be decided as the control start point; therefore, the optimum control start point is obtained without being influenced by disturbance sources such as vibrations between the tire and road surface during brake operation and the suspension, thus enabling accurate control to be effected using F or $\mu$.

Said embodiment further relates to a method of controlling an anti-lock brake system for vehicles as set described herein before, characterized in that in the pressure decreasing mode subsequent to the retaining mode or after moving to the pressure decreasing mode, the brake pressure is shifted from the pressure decreasing mode to the pressure increasing mode by a pressure decreasing threshold value, a set value of a specified value of elapsed time or a decision circuit or by a combination of two or more of such factors, so as to eliminate disturbance sources.

Any one of the control methods described herein before is used to shift the brake pressure from the pressure increasing mode to the retaining mode or pressure decreasing mode and then the brake pressure is shifted from the pressure decreasing mode to the pressure increasing mode by a pressure decreasing threshold value, a set value of a specified value of elapsed time or a decision circuit or by a combination of two or more of such factors, so as to eliminate disturbance sources, thus effecting ABS control.

Said embodiment further relates to a method of controlling an anti-lock brake system for vehicles, characterized in that during travel of a vehicle having an anti-lock brake system, the first brake pressure control is effected by using any of the control methods described herein before, and then at the point of time when the control method is completed, the control is continuously repetitively effected by using any of the control 1 methods described herein before until the vehicle stops or in and after the second time the control is continuously repetitively effected by using F or $\mu$, or $dF/dt$ or $d\mu/dt$

alone and the control method described herein before until the vehicle stops, thus eliminating disturbance sources.

The first brake pressure control is effected by using any of the control methods described herein before, and then after the brake pressure has been shifted from the pressure increasing mode to the retaining or pressure decreasing mode, the brake pressure is shifted from the pressure decreasing mode to the pressure increasing mode by a pressure decreasing threshold value, a set value of a specified value of elapsed time or a decision circuit or by a combination of two or more of such factors, whereupon said control is continuously repetitively effected until the vehicle stops or after the second time the control is continuously repetitively effected using F or $\mu$, or dF/dt or d$\mu$/dt alone and the control method described herein before until the vehicle stops.

After the brake pressure has been shifted to the pressure decreasing mode, the control is continuously repetitively effected in which the brake pressure is shifted from the pressure decreasing mode to the pressure increasing mode by a pressure decreasing threshold value, a set value of a specified value of elapsed time or a decision circuit or by a combination of two of such factors, or in and after the second time the control is continuously repetitively effected using F or $\mu$ or dF/dt or d$\mu$/dt alone and the aforesaid control method; therefore, the shift of the brake pressure from the pressure decreasing mode to the pressure increasing mode is continuously repetitively effected until the vehicle stops, so that disturbance in the vicinity of the F or $\mu$ brake optimum value can be eliminated

Said embodiment further relates to a method of controlling an anti-lock brake system for vehicles wherein when a vehicle having an anti-lock brake system mounted thereon has the emergency brake applied thereto, a change in the road surface friction force or road surface friction coefficient due to the increased brake pressure is detected by a road surface friction force detecting device or a road surface friction coefficient detecting device,

said method being characterized in that after the maximum value of the signal value of the road surface friction force F or road surface friction coefficient $\mu$ detected by the road surface friction detecting device or road surface friction coefficient detecting device has been ascertained, fixed lower limits are provided for the approximate maximum F value or approximate maximum $\mu$ value and the maximum F value or maximum $\mu$ value and the brake pressure is controlled such that F or $\mu$ is stably retained in the range, thus eliminating disturbance sources.

The method is not influenced by fluctuations in the F or $\mu$ value caused by disturbance and the brake pressure maintains approximately the maximum F value or maximum $\mu$ value without any unnecessary decrease in brake pressure, so that efficient and stabilized control can be effected.

Said embodiment further relates to a method of controlling an anti-lock brake system for vehicles wherein when a vehicle having an anti-lock brake system mounted thereon has the emergency brake applied thereto, a change in the road surface friction force or road surface friction coefficient due to the increased brake pressure is detected by a road surface friction force detecting device or a road surface friction coefficient detecting device,

said method being characterized in that after the maximum value of the signal value of the road surface friction force F or road surface friction coefficient $\mu$ detected by the road surface friction detecting device or road surface friction coefficient detecting device has been ascertained, fixed lower limits are provided for the approximate maximum F value or approximate maximum $\mu$ value and the maximum F value or maximum $\mu$ value and the brake pressure is controlled by being increased or decreased in the range in which F or $\mu$ is retained, thus eliminating disturbance sources.

The brake pressure is retained between the maximum F value or maximum $\mu$ value and the F value or $\mu$ value which is in the disturbance range, and efficient and stabilized control is effected without any unnecessary decrease in brake pressure.

in contrast to the fact that in the conventional control method, in order to prevent the locking of the wheel in the vicinity of the limit of brake force in the possession of a road surface, it has been necessary to once decrease the brake pressure to decrease the brake force on the road surface, the present invention makes it unnecessary to decrease the pressure, enabling the brake pressure to be retained in the vicinity of the maximum value of brake force in the possession of the road surface. Thereby, the brake distance for the emergency brake can be decreased, improving the safety of the vehicle.

Said embodiment futher relates to a method of controlling an anti-lock brake system for vehicles, characterized in that variations in F or $\mu$ with respect to brake pressure are monitored and when the upper limit of brake pressure in a preset control range is reached, if F or $\mu$ exceeds the previous maximum F or maximum $\mu$, the brake pressure is further increased to ascertain the maximum $\mu$ again, whereafter the above-mentioned brake pressure control is effected, thus eliminating disturbance sources.

During control according to the control method described herein before if the F value or $\mu$ value obtained from the road surface increases, that is, when the vehicle moves from a slippery road surface to a less slippery road surface, the brake force obtained from the road surface is efficiently used to shorten the brake distance.

In contrast to the fact the conventional control method has no means for knowing the vehicle having moved to a road surface which provides a higher road surface brake force during anti-lock brake operation, the change of the road surface can be detected with good responsibility to retain the optimum brake pressure. Thereby, the road surface brake force which can be primarily acquired is effectively used to shorten, thus improving the safety of the vehicle.

Said embodiment further relates to a method of controlling an anti-lock brake system for vehicles, characterized in that variations in F or μ with respect to brake pressure are monitored and if the F value or μ value decreases with respect to the brake pressure in a preset brake pressure control range, the brake pressure is rapidly decreased to ascertain the maximum u again, thus effecting control to eliminate disturbance sources.

During control according to the control method described herein before, if the F value or μ value obtained from the road surface decreases, that is, when the vehicle moves a more slippery road surface, the brake force is rapidly decreased to avoid locking and the optimum brake pressure control on the road surface in question is effected.

In contrast to the fact that the conventional control method makes the detection only when the wheel actually starts to be locked, the detection is made in the stage where the wheel is supposed to start to be locked, making it possible to start adjusting the brake pressure in the early period, thus eliminating the need for adjusting excessive brake pressure resulting from delayed decision, so that the optimum brake pressure control can be effected.

Said embodiment further relates to a method of controlling an anti-lock brake system for vehicles, characterized in that in the case where the maximum value of the signal value of the road surface friction force F or road surface friction coefficient μ detected by the road surface friction force detecting device or road surface friction coefficient detecting device can hardly be ascertained, quasi-F or quasi-μ is found between the maximum F value or maximum μ value and the minimum F value or minimum μ value within a given period of time, and the brake pressure control is effected corresponding to such quasi-F or quasi-μ, thus eliminating disturbance sources.

Stabilized brake pressure control can be effected even on a road surface which causes vigorous vibrations, such as an undulating road surface.

Said embodiment further relates to a method of controlling an anti-lock brake system for vehicles, characterized in that, in the case where the value between the maximum F value or maximum μ value and the minimum F value or minimum μ value within a given period of time varies beyond the allowable range, the individual values are measured again within a given period of time to newly find quasi-F or quasi-μ and the brake pressure control is effected corresponding to such quasi-F or quasi-μ, thus eliminating disturbance sources.

Optimum brake pressure control can be effected even on a road surface which causes vigorous vibrations, such as an undulating road surface.

Said embodiment further relates to a method of controlling an anti-lock brake system for vehicles, characterized in that, in the case where the maximum μ can be ascertained, control is effected according to the control methods described herein before thus eliminating disturbance sources.

Effective stabilized anti-lock brake control can be effected even on a road surface which causes vigorous vibrations, such as an undulating road surface.

Stabilized anti-lock brake control can be effected even on a road surface where the detected value of F or μ are high in variation, such as an undulating road surface.

Method of Detecting Control Point in ABS

In view of the above problems inherent in the anti-lock brake systems for vehicles according to the prior art, the invention has for its object the provision of a method of detecting the control point which enables normal ABS control even if a sensor liable to crosstalk or the like is used.

The object is met by the method described in claim 1. Subclaims 2 to 9 relate to preferred embodiments.

According to the invention described in Claim 1, in order to detect the timing of the control point, the detected signals of F or μ and T are adjusted in ratio or made equal in value from the rise of the brake start and the control point is calculated by the size of the change in ratio or in adjustment coefficient; thus, the control point which is not influenced by crosstalk or the like can be obtained.

Claim 2 relates to a method of detecting the control point in an ABS, characterized in that in the decision means of Claim 1, the point of time when the ratio of F or μ and T or adjustment coefficient substantially stops changing is decided to be the control timing. Thereby, the control point which is not influenced by crosstalk or the like can be obtained.

Claim 3 relates to a method of detecting the control point in an ABS, characterized in that in the decision means of Claim 1, the point of time when the ratio of F or μ and T or the adjustment coefficient, during brake pressure decreasing control, becomes substantially equal to the value obtained upon completion of the preceding brake pressure decreasing control is decided as the completion of the brake pressure decreasing control, said point of time being decided to be the optimum control timing for ABS. Thereby, the control point which is not influenced by crosstalk or the like can be obtained.

Claim 3 further relates to a method of detecting the control point in an ABS, characterized in that in the decision means of Claim 1, the point of time when the ratio of F or μ and T or the adjustment coefficient, during the brake pressure decreasing control, becomes above the value obtained during the first brake pressure decreasing control is decided to be the completion of the brake pressure decreasing control, said point of time being decided to be the optimum control timing for the ABS. Thereby, the control point which is not influenced by crosstalk or the like can be obtained.

Claim 3 further relates to a method of detecting the control point in an ABS, characterized in that in the decision means of Claim 1, the point of time when the ratio of F or $\mu$ and T or the adjustment coefficient, during the brake pressure decreasing control, starts to increase is decided to be the completion of the brake pressure decreasing control, said point of time being decided to be the optimum control timing for the ABS. Thereby, the control point which is not influenced by crosstalk or the like can be obtained.

Claim 4 relates to a method of detecting the control point in an ABS, characterized in that in the decision means of Claim 1, the point of time when the ratio of F or $\mu$ and T or the adjustment coefficient, except during the brake pressure decreasing control, becomes just above the value obtained during the first brake pressure decreasing control is decided as the start of brake pressure decreasing control, said point of time being decided to be the optimum control timing for the ABS. Thereby, the control point which is not influenced by crosstalk or the like can be obtained.

Claim 5 relates to a method of detecting the control point in an ABS, characterized in that in the decision means of Claim 1, the point of time when the ratio of F or $\mu$ and T or the adjustment coefficient, during the brake pressure retaining control, becomes greater than the value obtained during the first brake pressure decreasing control is decided to be the start of brake pressurization control, said point being decided to be the optimum control timing for the ABS. Thereby, the control point which is not influenced by crosstalk or the like can be obtained.

Claim 4 further relates to a method of detecting the control point in an ABS, characterized in that in the decision means of Claim 1, the point of time when the ratio of F or $\mu$ and T or the adjustment coefficient, during the brake pressure retaining control, becomes smaller than the value obtained during the first brake pressure decreasing control and becomes further smaller is decided to be the start of brake pressure decreasing control, said point being decided to be the optimum control timing for the ABS. Thereby, the control point which is not influenced by crosstalk or the like can be obtained.

Claim 6 relates to a method of detecting the control point in an ABS, characterized in that in the decision means of Claim 1, the point of time when the ratio of F or $\mu$ and T or the adjustment coefficient, during the brake pressure retaining control, becomes smaller than the value obtained during the first brake pressure decreasing control and is stabilized is decided to be continuation of pressure retention or the start of control of gentle increase of pressure, said point of time being decided to be the optimum control timing for the ABS. Thereby, the control point which is not influenced by crosstalk or the like can be obtained.

According to the method described in Claims 1 through 6, to detect the timing for control point, the detected signal of F or $\mu$ and T are adjusted in ratio or made equal in value from the rise of brake start and the control point can be calculated from the size of the change in the ratio or adjustment coefficient to provide the control point which is not influenced by crosstalk or the like; therefore, using the detected value as such which has a crosstalk component such as brake torque which is difficult to eliminate when detecting the road surface friction force F or road surface friction coefficient $\mu$, it is possible to find the accurate control point, and in ABS control in which safety is the most important factor, the probability of erroneous decision can be minimized.

Claim 7 relates to a method of detecting the control point in an ABS having a stress sensor which provides an output proportional to the road surface friction F or road surface friction coefficient $\mu$ having mixed therein a crosstalk component, such as brake torque T, and to the brake torque T, said method being characterized in that it uses adjusting means for adjusting the ratio of detected signals of F or $\mu$ and T, and decision means for deciding the control point by a change in F - T value from its value after adjustment, wherein the timing for the control point is detected by said change in the F - T value.

According to the method described in Claim 7, in order to detect the timing for the control point, and T, the timing for the control point is calculated and decided by a change in the F - T value during brake control and thus the crosstalk component T, which is originally a noise, is positively utilized to provide the optimum control point.

Claim 7 further relates to a method of detecting the control point in an ABS having a stress sensor which provides an output proportional to the road surface friction force F or road surface friction coefficient $\mu$ and the brake torque T, said method being characterized in that the timing for the control point is detected by a change in the F - T value during brake control.

According to the method described in Claim 7, in order to detect the timing for the control point, and T, the timing for the control point is calculated and decided by a change in F - T value during brake control and thus the crosstalk component T, which is originally a noise, is positively utilized to provide the optimum control point.

Claim 8 relates to a method of detecting the control point in an ABS, characterized in that in the decision means in Claim 7, a threshold value for the F - T value is provided to decide the control point in control.

According to the method described in Claim 8, to detect the timing for the control point, a threshold value for the F - T value is provided during brake control to decide the timing in control or decide the timing for the control of F, N, $\Delta$F, $\Delta$N, thereby eliminating the influences of noise.

Claim 9 relates to a method of detecting the control point in an ABS, characterized in that in the threshold value of Claim 8, a change in the F

- T threshold value is corrected as the road surface friction coefficient changes, thereby detecting the timing for the control point.

According to the method described in Claim 9, in order to detect the timing for the control point, a threshold value is used for the F - T value to correct the threshold value for the F - T value as the road surface friction coefficient changes, so as to decide the timing for the control point; thus, as the vehicle speed changes from high to low value, the threshold value is decreased according as the road surface friction coefficient decreases, thereby providing the optimum control point.

In the method described in Claims 7 through 9, the T value which is originally a noise inherent in a sensor used in the invention is used in the form of F - T, whereby without using a gear-like wheel speed sensor used in conventional ABSs, hybrid control by a single sensor can be effected which uses both slip ratio control with higher response and control decision based on F or μ according to the invention.

The present invention will now be described in more detail with reference to embodiments thereof shown in the drawings.

BRIEF DESCRIPTION OF THE DRAWINGS

Fig. 1 is a block diagram showing an example of a hard arrangement for a control method for an anti-lock brake system for vehicles according to said embodiment useful to understand the present invention

Fig. 2 is a block diagram showing an other example of a hard arrangement for a control method for an anti-lock brake system for vehicles according to said embodiment useful to understand the present invention

Fig. 3 is a block diagram showing an other example of a hard arrangement for a control method for anti-lock brake system for vehicles according to said embodiment useful to understand the present invention;

Fig. 4 is a block diagram showing an other example of a hard arrangement for a control method for an anti-lock brake system for vehicles according to said embodiment useful to understand the present invention;

Fig. 5 is a flowchart showing a main routine processing of a control device shown in Fig. 4;

Fig. 6 is a flowchart showing a brake liquid pressure decrease processing routine shown in Fig. 5;

Fig. 7 is a flowchart showing a brake liquid pressure re-increase processing routine shown in Fig. 5;

Fig. 8 is a flowchart showing an interruption with respect to the main routine processing shown in Fig. 5;

Fig. 9 is a flowchart showing a control method for an anti-lock brake system for vehicles according to said embodiment useful to understand the present invention;

Fig. 10 is a flowchart showing a control method for an anti-lock brake system for vehicles according to said embodiment useful to understand the present invention;

Fig. 11 is a flowchart showing a control method for an anti-lock brake system for vehicles according to said embodiment useful to understand the present invention;

Fig. 12 is a flowchart showing a control method for an anti-lock brake system for vehicles according to said embodiment useful to understand the present invention;

Fig. 13 is a flowchart showing a control method on the basis of the road surface friction force F according to the present invention;

Fig. 14 is a functional system diagram in the present invention; and

Fig. 15 is an output trend graph of road surface friction force, brake torque and brake oil pressure during hard braki ng.

DESCRIPTION OF THE PREFERRED EMBODIMENTS

Method of Controlling Anti-Lock Brake System for Vehicles

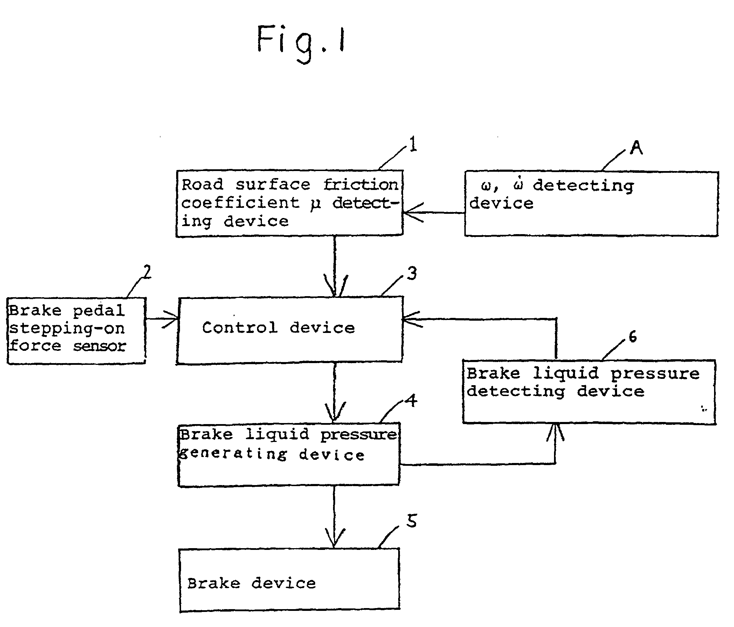

Fig. 1 is a block diagram showing an example of a hard arrangement for a control method for an anti-lock brake system for vehicles using the road surface friction coefficient. In the figure, the character A denotes an $\omega$, $\dot{\omega}$ detecting device; 1 denotes a road surface friction coefficient $\mu$ detecting device; 2 denotes a brake pedal stepping-on force sensor; 3 denotes a control device; 4 denotes a brake liquid pressure generating device; 5 denotes a brake device; and 6 denotes a brake liquid pressure detecting device. The control device 3 is composed of electronic circuits including a microprocessor, a memory and an input/output interface, and is adapted to operates according to a program written in the memory in advance.

In the case where anti-brake system (ABS control is effected using a road surface friction coefficient $\mu$ ($\mu$ sensor), the optimum control start point is often misunderstood owing to disturbance sources such as vibrations produced in the tire and road surface during braking, and the suspension. To eliminate this disturbance in the vicinity of the $\mu$ control optimum value to obtain the optimum control start point, in this example, the drop in the wheel speed owing to braking is detected by a predetermined value of ω or μ defined by

$$\mu = \frac{d\omega/dt}{N}$$

and using this as the control start point, the known ABS control method is effected using μ.

As for the specified value of ω, in the case where the value at the start of measurement is ω1 and the value at the specified time is ω2, the specified value is expressed by

$$\frac{\omega 1 - \omega 2}{\omega 1} \geq 0.03 \text{ to } 0.2$$

Expressed using dω/dt, from the equation of wheel motion,

$$I \, d\omega/dt = \mu \cdot N \cdot r - T_B$$

In the above equation, I is the wheel inertia, N is the wheel load, r is the wheel radius, $T_B$ is the brake torque, and μ is the friction coefficient.

In addition, the brake torque $T_B$ is found from

$$T_B = 2 \cdot \mu_P \cdot B \cdot A \cdot P_W.$$

In this equation, $\mu_P$ is the friction coefficient between the brake disk and pad, B is the effective radius of the pad, $P_w$ is the brake oil pressure.

Since I and r can be regarded as constants,

$$\mu \cong \frac{d\omega/dt + TB}{N}$$

and this μ is used.

And dω/dt is detected by the wheel speed sensor now in use, N is measured by a vertical load sensor mounted on the suspension, and $T_B$ is calculated by the above equation. In addition, if the known eliminating means is used, since the need for considering the crosstalk with respect to the output from the F sensor measured as a sensor component $T_B$ by the μ sensor is decreased, μ can be calculated by this equation. The proper range around this maximum value is taken as the optimum control start point.

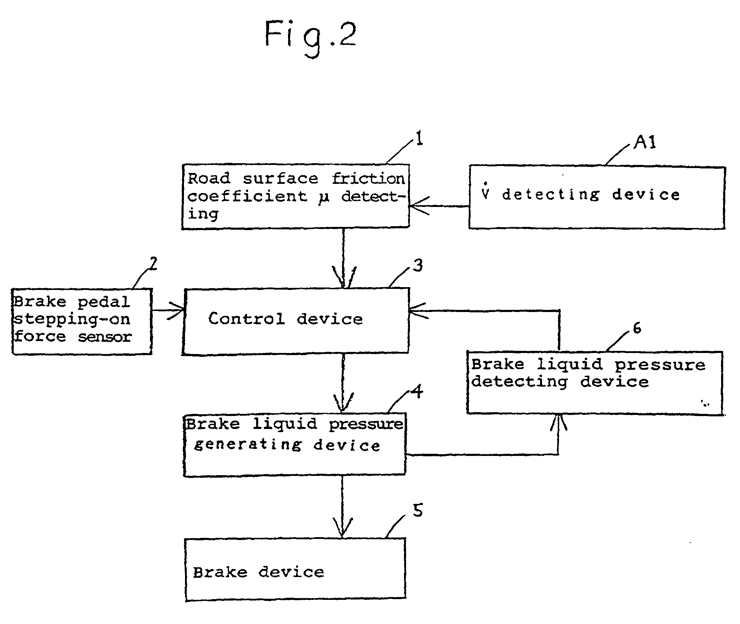

Fig. 2 is a block diagram showing an example of a hard arrangement for a control method for an anti-lock brake system for vehicles using the road surface friction coefficient μ, and this embodiment differs from the preceding one in that instead of the ω, ω̇ detecting device A shown in Fig. 1, use is made of a V̇ detecting device A1 using an acceleration sensor, the rest of the arrangement being the same so that a repetitive description thereof is omitted. In this embodiment, to obtain the optimum control start point, the acceleration sensor is used and as for μ according to dV/dt, from the equation of wheel motion,

$$m \cdot dV/dt = - \mu \, N$$

In the above equation, m is the vehicle weight, N is the wheel load, and μ is the friction coefficient. However, m can be regarded as a constant.

From the above equation,

$$\mu = - m \frac{dV/dt}{N}$$

and the μ in this equation is used.

And dV/dt is measured by the acceleration sensor and N is measured and calculated by the vertical load sensor mounted on the suspension, and the proper range around this maximum value is taken as the optimum control start point.

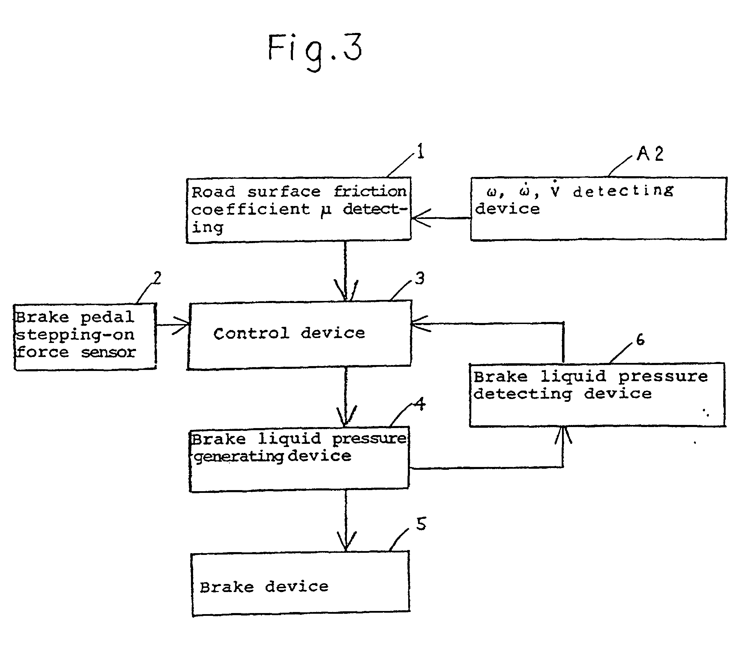

Fig. 3 is a block diagram showing an example of a hard arrangement for a control method for anti-lock brake system for vehicles using the road surface friction coefficient μ, which differs from the embodiments shown in Figs. 1 and 2 only in that an ω, ω̇, V̇ detecting device A2 is used, the rest of the arrangement being the same so that a repetitive description thereof is omitted.

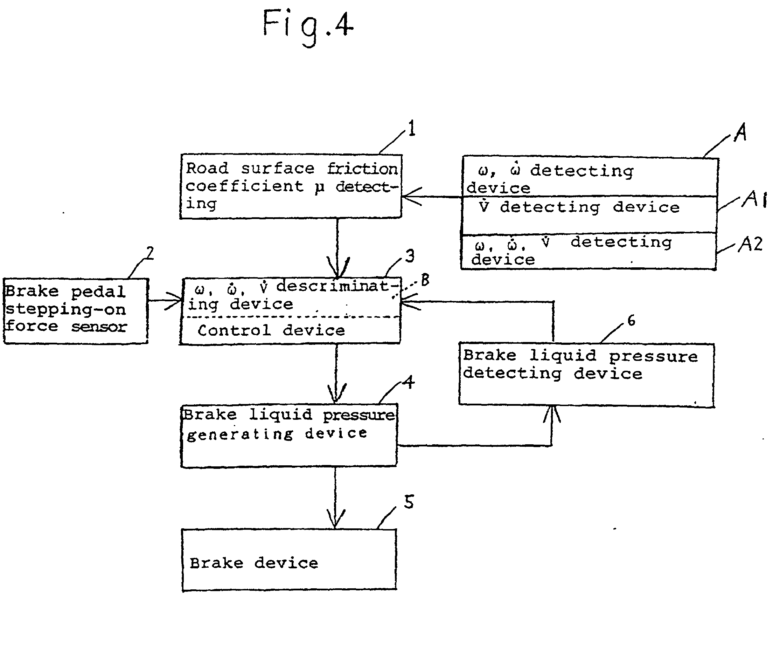

Fig. 4 is a block diagram showing an example of a hard arrangement for a control method for an anti-lock brake system for vehicles using the road surface friction coefficient μ, and this embodiment differs from the embodiments shown in Figs. 1 through 3 in that detecting devices A, A1, and A2 for (ω, ω̇, (V̇), and (ω, ω̇, V̇), respectively, are selectively used and in that a discriminating circuit B based on ω, ω̇, V̇ is added to the control device 3, the rest of the arrangement being the same so that a repetitive description thereof is omitted.

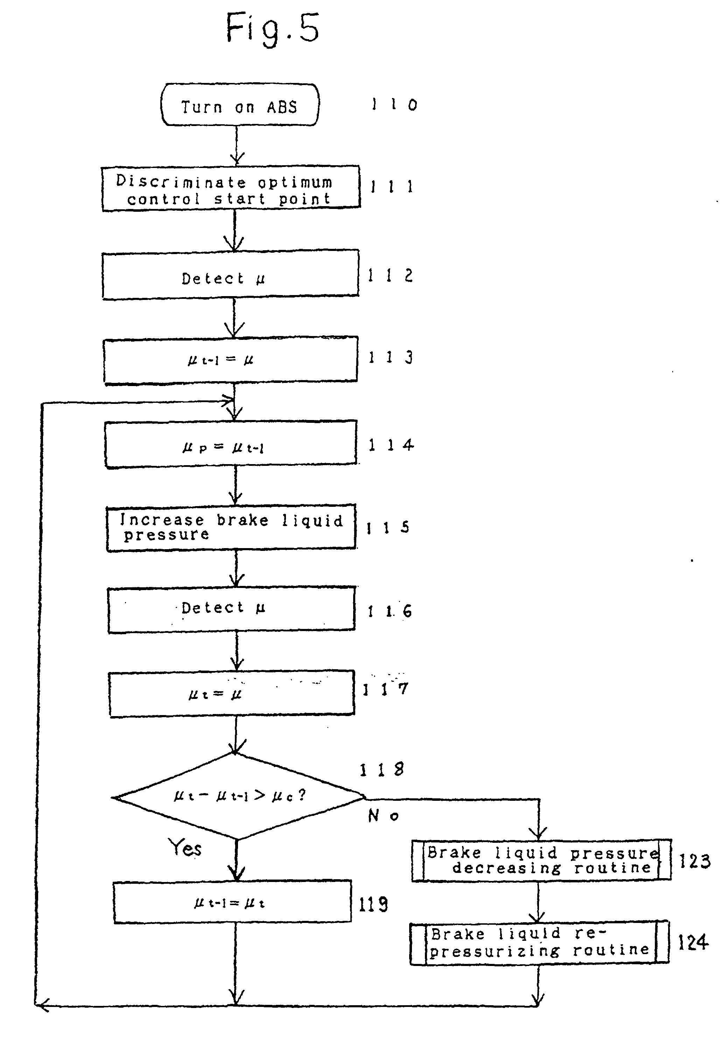

The operation of the control device 3 in the embodiment shown in Fig. 4 will now be described on the basis of the flowcharts shown in Figs. 5 through 8.

When the brake stepping-on force exceeds the preset value, the anti-lock brake device starts to operate, changing the normal brake operation to the anti-lock brake operation. The step 110 of the main routine shown in Fig. 5 represents the start of this anti-lock brake operation. Subsequently, at the step 111, the optimum control start point is discriminated on the basis of ω and ω̇ or V̇, at the step 112, the road surface friction coefficient μ is detected, and at the step 113, this value of μ is stored in a variable labeled by μ t - 1. Subsequently, at the step 114, this value is stored in a variable labeled by this μp. Then, after the brake liquid pressure is increased at the step 115, μ is detected at the step 116. At the step 117, the detected value of μ of the step 116 is stored in a variable labeled by μt. Then the processing goes to the step 118, comparing the difference μt - μt - 1 between two values μt and μt - 1 with a predetermined reference

value $\mu c$. If the difference $\mu t - \mu t - 1$ is greater than $\mu c$, the processing goes to the step119, and if it is equal to or smaller than $\mu c$, the processing goes to the brake liquid pressure decreasing routine at the step 123. At the step 119, the value stored in the variable $\mu t$ is stored in the variable $\mu t - 1$ and this value of $\mu t - 1$ is updated. subsequently the processing returns to the step 114.

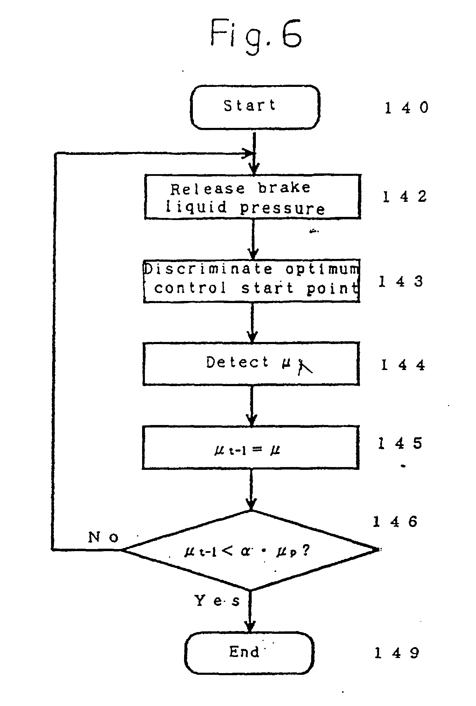

At the brake liquid pressure decreasing routine 123, as shown in Fig. 6, first at the step 142 the brake liquid pressure is released or decreased to a given lower level. Then at the step 143, the optimum control start point is discriminated on the basis of $\omega$ and $\dot{\omega}$ or $\dot{V}$ and after the $\mu$ is detected at the step 144, this detected value is stored in the variable $\mu t - 1$ at the step 145.

Then, the processing goes to the step 146, where it compares $\mu t - 1$ with $\alpha \cdot \mu p$. The coefficient $\alpha$ is a constant preset at a suitable constant value in the range of 0 to 1. If the variable $\mu t - 1$ is smaller, the processing goes to the step 149, where the brake liquid pressure decreasing routine 123 is completed, and it goes to the brake liquid re-pressurizing routine at the step 124. If the variable $\mu t - 1$ is greater, it returns to the step 142.

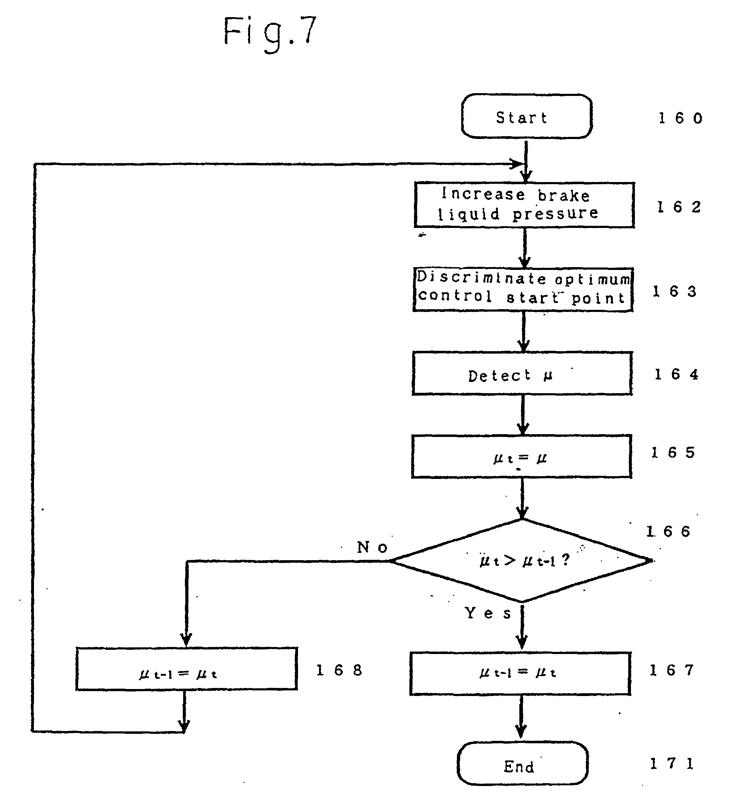

At the brake liquid re-pressurizing routine 124 subsequent to the brake liquid pressure decreasing routine 123, the processing shown in Fig. 7 is performed. First, at the step 162, the brake liquid pressure is increased. Subsequently, at the step 163, the optimum control start point is discriminatd on the basis of $\omega$, $\dot{\omega}$ or $\dot{V}$, and $\mu$ is detected at the step 164 and is stored in the variable $\mu t$ at the step 165. Then, the variable $\mu t$ is compared with the variable $\mu t - 1$ at the step 166. If the variable $\mu t$ is greater, the processing goes to the step 167 where the variable $\mu t$ is stored in the variable $\mu t - 1$ to update the stored value of the variable $\mu t - 1$. Then, the processing goes to the step 171 to complete the brake liquid re-pressurizing routine, returning to the step 114 of the main routine. If the variable $\mu t$ is smaller or equal at the step 166, the processing goes to the step 168 to update the variable $\mu t - 1$ to the variable $\mu t$ in the same manner as at the step 167. And the processing returns to the step 162.

As the control device 3 performs the above-described processing, the anti-lick brake system according to the present invention operates as follows. When the anti-lock brake system starts to operate, while the rate of increase of the road surface friction coefficient $\mu$ exceeds a predetermined reference value, the brake liquid pressure is kept on the increase and $\omega$ or $d\omega/dt$ or $dV/dt$ is used to decide the optimum control start point, and when the rate of increase of the road surface friction coefficient $\mu$ lowers below the reference value, the brake liquid pressure is lowered or released. At this time, after moving to the pressure decreasing mode, the control is moved from the pressure decreasing mode to the pressure increasing mode by using the threshold value for pressure decrease, the preset value of specified value of elapsed time, or the discriminating circuit or a combination of these factors. Thereafter, the above operation is continue and repeated until the vehicle stops.

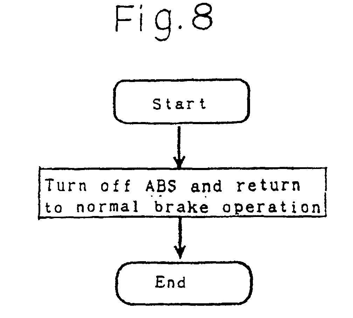

In the case where the vehicle speed lowers below a given value during the anti-lock brake operation, no matter which step in the flowchart shown in Figs. 5 through 7 the control device 3 is performing, it immediately executes the interruption routine shown in Fig. 8 to control the brake liquid pressure device such that it ends the anti-lock brake operation and returns to the normal brake operation. If the vehicle speed is sufficiently low, there is no need for anti-lock brake operation and there is no need for it when the vehicle is stopping.

The above refers to an embodiment wherein the road surface friction coefficient $\mu$ is used, but in the case where the road surface friction force F is used, the same operation as in the above operation using $\mu$ can be performed by multiplying $\mu$ by N from the relation

$$F = \mu \cdot N$$

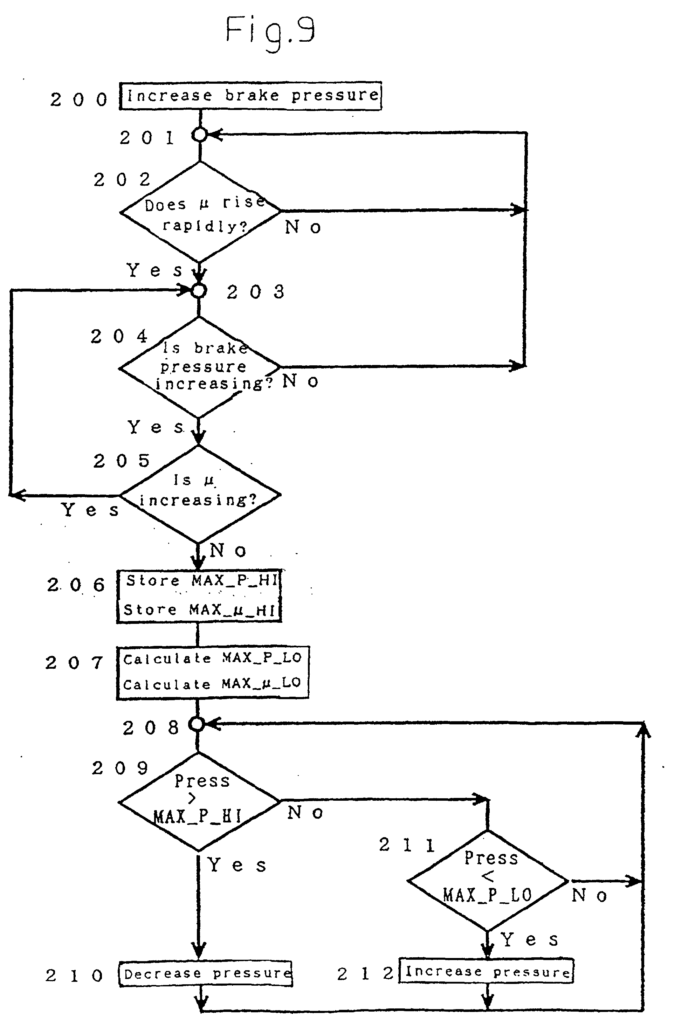

Fig. 9 is a schematic flowchart showing a control method for an anti-lock brake system for vehicles using the road surface friction coefficient $\mu$. If the driver steps on the hard brake in an emergency, the brake pressure is increased at the step 200. Then, at the step 202, whether or not $\mu$ sharply increases is decided. If it sharply increases, it is decided to be the hard brake and the ABS control starting at the step 203 is performed. If $\mu$ decreases at the steps 204 and 205 irrespective of the brake pressure being on the increase, it is decided that the $\mu$ max value available on this road surface has been passed, and at the step 206, the $\mu$ value before $\mu$ decreases is stored in MAX_$\mu$_HI and the associated brake pressure is stored in MAX_P_HI. At the step 207, on the basis of this MAX value, the lower limit of vibration range of the usual road surface is calculated as MAX_$\mu$_LO and the corresponding brake pressure is calculated as MAX_P_LO. At the step 209, if the current brake pressure is greater than MAX_P_HI, the decrease of the brake pressure at the step 210 is effected, with the processing returning to the step 208. Further, if the current brake pressure is less than MAX_P_HI, the processing goes to the step 211. At the step 211, if the current brake pressure is less than MAX_P_LO, the brake pressure is increased at the step 212 and the processing returns to the step 208. Further, if, at the step 211, the current brake pressure is greater than MAX_P_LO, the processing returns to the step 208 without doing anything. Thereby, the brake pressure can be maintained between $\mu$MAX and the calculated fixed lower limit by a minimum of control.

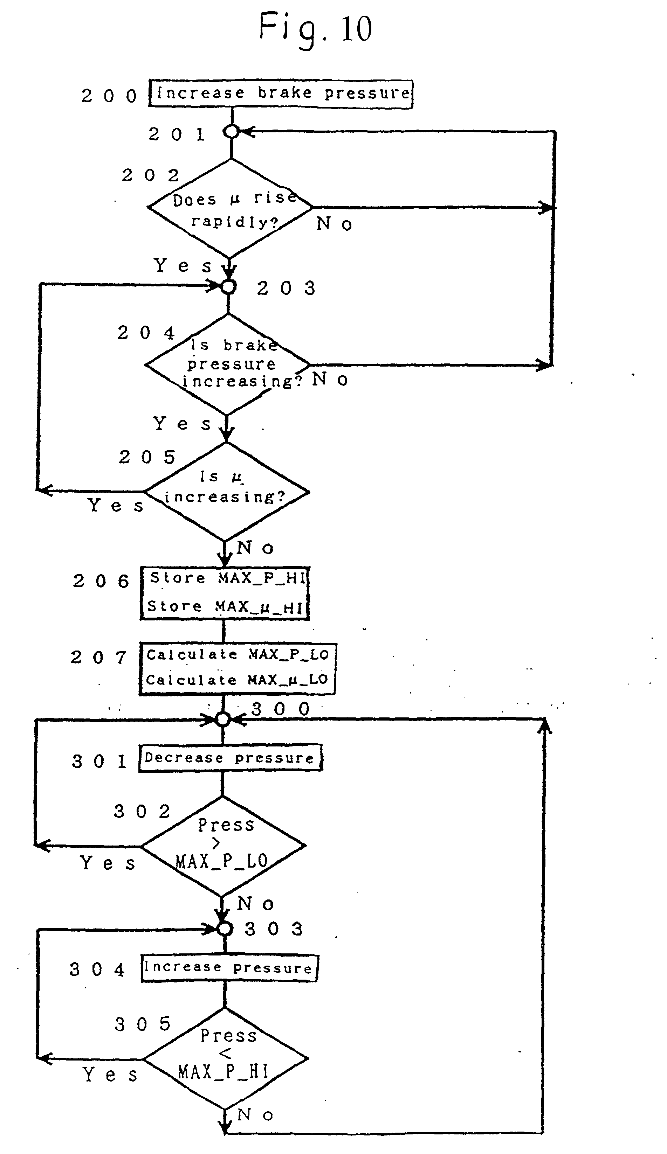

Fig. 10 is a schematic flowchart showing a control method for an anti-lock brake system for vehicles using the road surface friction coefficient $\mu$. The operation from the step 200 to the step 207 is exactly the same as above, so that a description thereof is omitted. In the loop including the steps 300, 301, 302, the pressure is decreased until the brake pressure is equal to MAX_P_LO. Then, in the loop including the steps 303, 304, 305, the pressure is increased until the brake pressure is equal to MAX_P_HI. Then, the processing returns to the loop including the steps 300, 301, 302. Thus, the brake pressure can be varied such that it is between the MAX value and the calculated fixed lower limit.

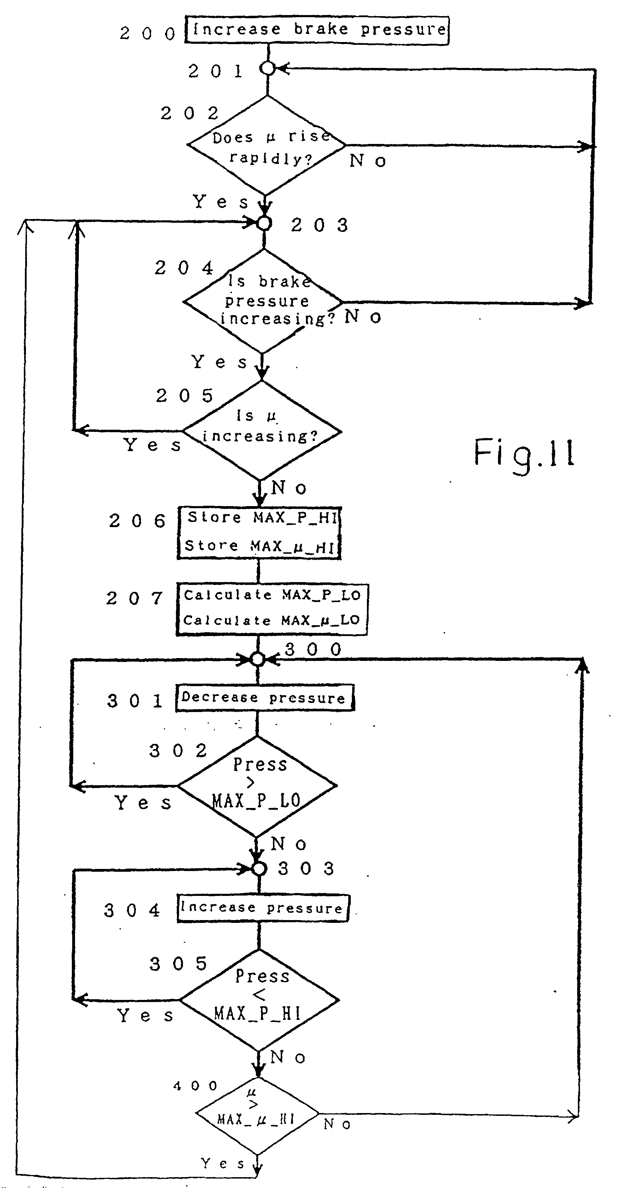

Fig. 11 is a schematic flowchart showing a control method for an anti-lock brake system for vehicles using the road surface friction coefficient μ. The operation from the step 200 to the step 305 is exactly the same as above, so that a description thereof is omitted. When the processing has gone through the loop including the steps 303, 304, 305, that is, if at the step 400 the current μ value is greater than MAX_μ_HI stored at the step 206, it can be decided that the vehicle has moved to a road surface where greater μ can be obtained. The processing returns to the step 203 where the ABS control was started, and it is possible to seek the μMAX value available from this road surface.

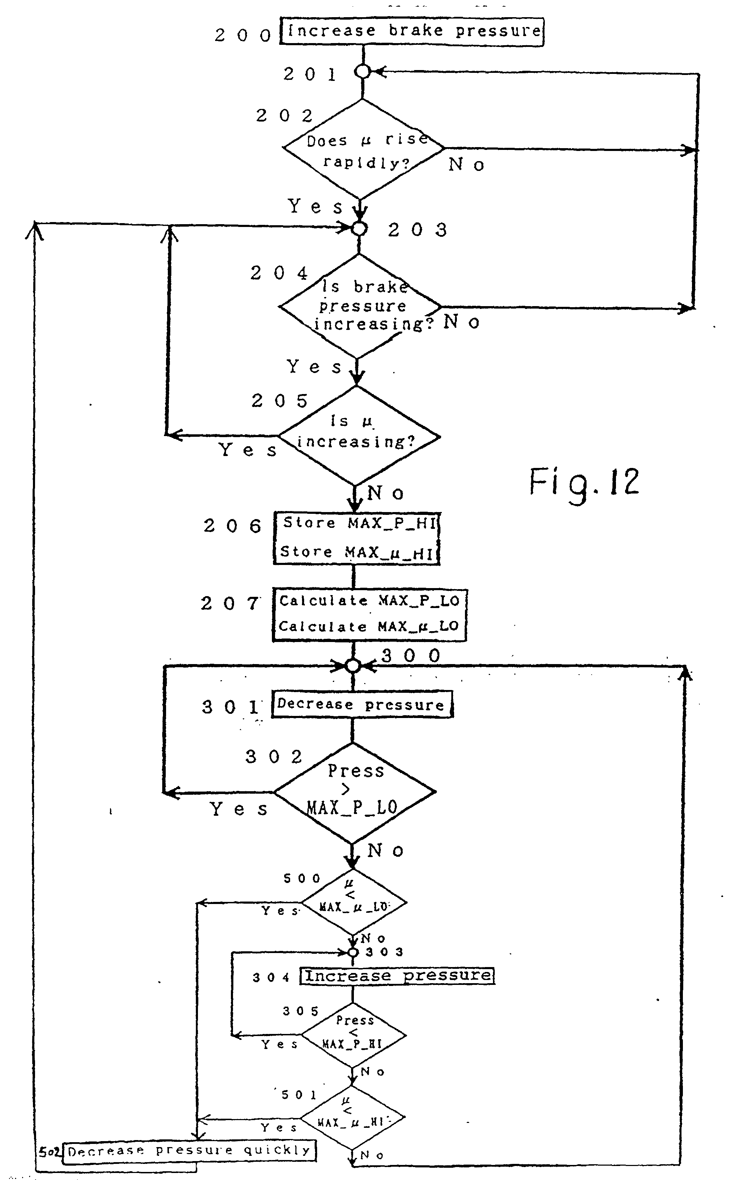

Fig. 12 is a schematic flowchart showing a control method for an anti-lock brake system for vehicles using the road surface friction coefficient μ. The operation from the step 200 to the step 302 and from the step 303 to the step 305 is exactly the same as above, so that a description thereof is omitted. At the time of the step 500, the brake pressure is at the value of MAX_P_LO, and at the time of the step 207, the corresponding μ was MAX_μ_LO. If the current μ is smaller than the value of MAX_μ_LO, it is decided that the μ of the road surface has decreased, and after quick decrease of pressure at the step 502, the processing returns to the ABS control start point at the step 203. At the time of the step 501, the brake pressure is at the value of MAX_P_HI, and the corresponding μ at the time of the step 207 was at the value of MAX_μ_HI. If the current μ is smaller than the value of MAX_μ_HI, it is decided that the μ of the road surface has decreased, and after quick decrease of pressure, the processing returns to the ABS control start point at the step 502.

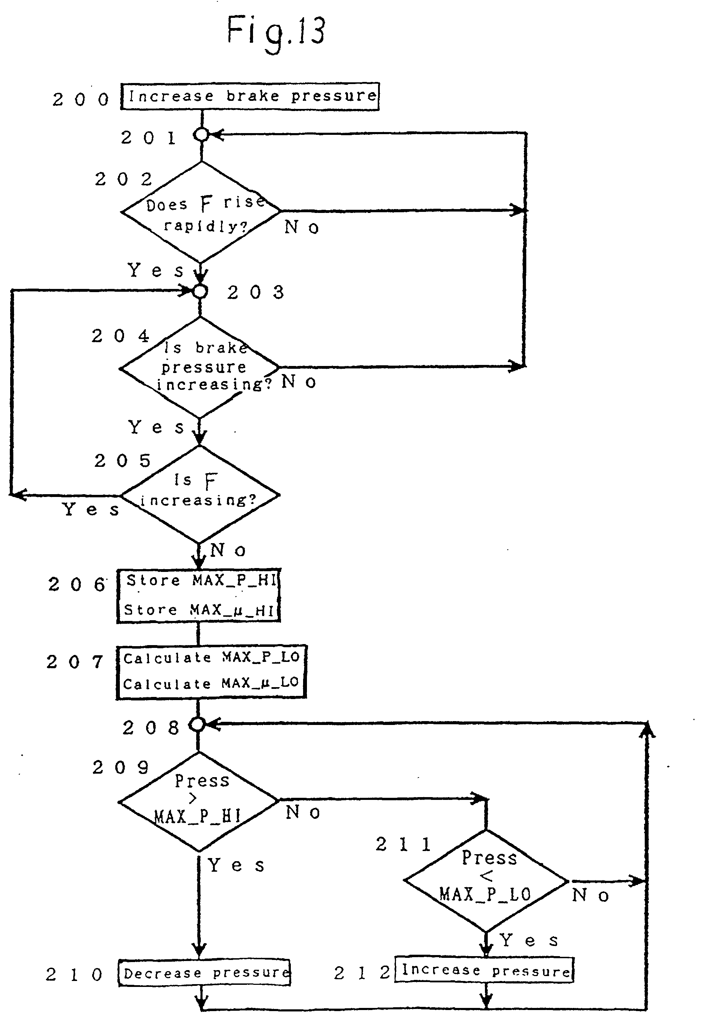

Fig. 13 is a schematic flowchart showing a control method for an anti-lock brake system for vehicles using the road surface friction force F, it being noted that the road surface friction coefficient μ has been replaced by the road surface friction force F. Since the method of control can be performed in exactly the same way as in the case of μ, a detailed description thereof is omitted.

Further, the control using μ shown in Figs. 10 through 12 can be replaced by the control using F as in the case of Fig. 13.

Method of Detecting Control Point in ABS

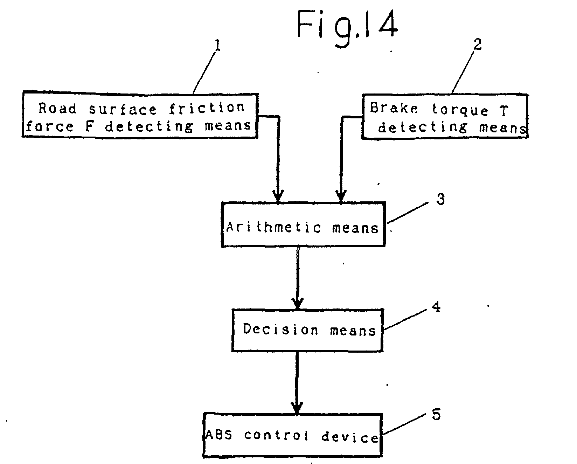

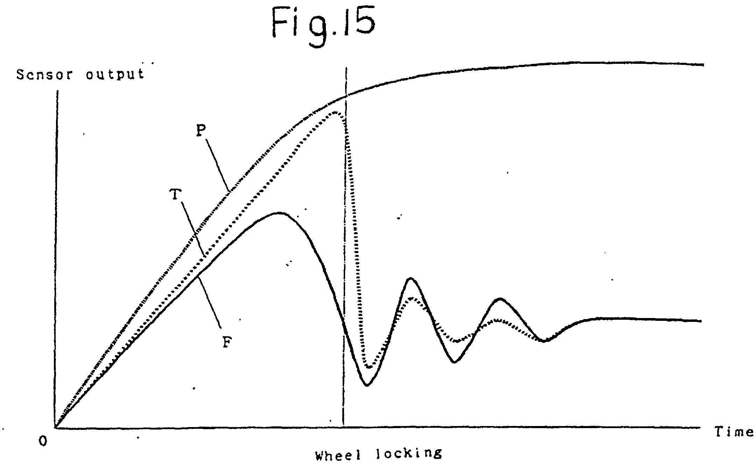

The invention will now be described with reference to embodiments shown in the drawings. Fig. 14 is a functional system diagram and Fig. 15 is a typical stress sensor versus output graph obtained when a vehicle is braked hard leading to the locking of the wheel.

As can be seen from Fig. 15, when a vehicle is braked hard, for some time (after brake on) with sufficient friction force remaining on the road surface, as the curve P (brake oil pressure P) rises, the curve F (road surface friction force F) and curve T (brake torque T) increase at the same rate of increase in proportion to the curve P. It is known that the proportion value (F/T) in the output values of the curves F and T in this period of time is constant. However, when the friction force (dependent on the tire and road conditions) obtained from the road surface approaches the limit, the brake torque represented by the curve T continues rising as usual in proportion to the brake oil pressure, but it is known that the rate of increase of the road surface friction force represented by the curve F decreases and then rapidly decreases as soon as the brake oil pressure exceeds a given pressure (the brake force corresponding to the limit value of friction force obtained from the road surface). Therefore, in this period of time, the proportion value (F/T) in the output values of the curves F and T rapidly decreases.

Further, it sometimes happens that the value of the brake torque T is much greater than the road surface friction force F and with the road surface friction force detecting means 1 of Fig. 14 it would be very difficult to detect the pure road surface friction force F. Therefore, usually it follows that with the road surface friction force detecting means 1, a substantial amount of brake torque T mixes in and is measured as crosstalk. If, however, the proportion value (F/T) is used for decision in control rather than using the detected value of the road surface friction force F, then

$$\frac{(F + t)}{T} = \frac{F}{T} + \frac{t}{T}$$

where t is the crosstalk component which has mixed in the road surface friction force F. Further, since t is a value proportional to the brake torque T, t/T is a constant. Therefore, in the case where F/T is used to detect the change therein so as to decide the control point, it is possible to effect control of the type in which crosstalk component due to the brake torque T is eliminated.

Thus, as shown in Fig. 14, immediately after braking, the detected value from the road surface friction force detecting device 1 and the detected value from the brake torque detecting means 2 are fed to the arithmetic means 3, where the F/T is successively calculated and the result is fed to the decision means 4. In the decision means 4, the ratio F/T is monitored immediately after the braking and at the point of time when this ratio has suddenly decreased ( the change has increased), it is decided that the wheel s going to be locked. And this point of time is detected as the point of time for the first pressure decreasing timing in ABS control and the detected signal is used to give a brake oil pressure decreasing instruction to the ABS control device 5; in this manner, the ABS control to avoid the locking of the wheel is made possible.

If the brake oil pressure P is increased (the oil is pressurized), the brake torque T increases through the transmission delay in the brake system, and through the transmission delay the road surface friction force F increases. Generally, the region on the left-hand side of the peak of the curve F in Fig. 15 is called the stable region, while the region on the right-hand side of the peak of the curve F in Fig. 15 is called the unstable region. If the balance is maintained in the stable region, even if the road surface friction force F acting between a tire and the road surface changes owing to sending small stones flying, a force acts by which the original position can be instantly restored. However, if said change in the road surface friction force F takes place in the unstable region, it rapidly moves in the wheel locking direction (to the right-hand side of the peak of the curve F) or to the position in the stable region where balance can be maintained.

Therefore, in Claim 2, the ratio F/T being constant (the first differential of F/T being 0) means stability in the particular position (to the left-hand side of the peak of the curve F) in the graph of Fig. 15, which means that the brake oil 1 pressure P and the brake torque T are balanced with each other. The ratio F/T being constant (the first differential of F/T being 0) means that for example, the brake oil pressure decreasing control when the brake oil pressure P is excessively increased and moves to the unstable region moves it to the stable region to provide the road surface friction force F which is proportional to the current brake oil pressure P. This serves as a confirmation decision allowing the next control to be performed upon completion of the preceding control.

The time when the brake oil pressure P is being decreased is the time when it goes too far in the direction of unstability to result in the F/T value being high, and the decision of stopping decreasing the brake oil pressure can better be performed by referring to the preceding or first successful control. In the case of referring to the preceding control, if the brake oil pressure P or the brake torque T which is proportional to P before the locking of the wheel is used to decide the pressure decrease stopping point, the optimum control oil pressure P may change to result in erroneous control if there is a change of the road surface between the preceding time of control and this time of control (for example, from a dry asphalt pavement to a road wet with water). However, if the F/T value is used for decision, since the F/T value does not almost change, the decision using thecomparison with the preceding value described in Claim 3 results in less erroneous decision and hence safer control decision; thus, such means is very effective.

As for the decision of stopping decrease of the brake oil pressure, if the delay in the control system is greater than the response required by the control, fruitless pressure decrease would be performed to lose the braking distance unless the control is effected before the F/T value fully decreases to the target value. This time also, as in the above, the road surface friction force F is directly used and in order not to result in erroneous control owing to a change of the road surface, decision is made by at the point where the F/T value starts to move in the target direction (the point where it starts to decrease) by using the F/T value as described in Claim 3; in this manner, safer control can be effected.

In the case where the F/T value increases during the retaining of the brake oil pressure P or during pressure control, this means that the pressure is moving in the wheel locking direction (to the right in the graph of Fig. 15); therefore, the control is moved to decrease the brake oil pressure P. This is not almost influenced by a change of the road surface since the F/T value is used as described in Claim 4; thus, erroneous control can be effectively eliminated.

In the brake oil pressure retaining control, if the F/T is greater than the value obtained in the first or preceding brake pressure decreasing control is stable, this means that the preceding control decision value is too small, so that mild pressure control is effected (Claim 5) and is the F/T value in on the decrease, it is decided that it is moving in the unstable direction (to the right-hand side of Fig. 15), so that the pressure decreasing control is effected (Claim 4). If the F/T value is small and stable, this means that the friction force F available from the road surface is on the increase, so that the mild pressure control is effected (Claim 6).

In Claim 7, as in the approximate equation of motion shown below

$$I \cdot \frac{d\omega}{dt} = k1 \cdot F - k2 \cdot T$$

from the moment of inertia I of the wheel and F and T multiplied by the proportionality constants k1 and k2, respectively, the F - T value is a value proportional to the wheel acceleration d$\omega$/dt. This can be used as a wheel speed sensor; thus, there has been realized a wheel speed sensor capable of real time sensing which has eliminated the drawback of being lacking in response (the slower the sensing, the worse this situation) which is characteristic of the conventional gear-like wheel speed sensors. Hybrid control using both the slip ratio control based on the wheel speed according to the prior art and the control decision based on F or $\mu$ according to the present invention are made possible by a single sensor.

In all embodiments described above, F/T has been used, but substantially the same result can also be obtained by using $\mu$/T. However, since $\mu$ = F/T, the load moving component of the vehicle is included in $\mu$.

**Claims**

**1.** A method of detecting the control point, i.e. the point where the brake pressure is shifted from a pressure increasing mode to a pressure retaining or decreasing mode, upon emergency breaking of a vehicle having an ABS which comprises a stress sensor (1, 2 in Fig. 14) providing an output proportional to the road surface friction force F or road surface friction coefficient μ having mixed therein a crosstalk component, such as brake torque T, and proportional to the brake torque T, **characterised by**

making an adjustment from the rise of the brake start such that detected signals of F or μ and T are adjusted in ratio or made equal in value, and

deciding the control point by a change in said ratio or in adjustment coefficient, wherein the timing of the control point is detected by the size of a change in the ratio of detected signals of F or μ and T or in the adjustment coefficient.

2. The method of claim 1 wherein the point of time, when said ratio or the adjustment coefficient substantially stops changing is decided to be the control timing.

3. The method of claim 1 wherein the point of time,

when said ratio or the adjustment coefficient, during brake pressure decreasing control, becomes substantially equal to the value obtained upon completion of the preceding brake pressure decreasing control, or,

when said ratio or the adjustment coefficient during the brake pressure decreasing control becomes greater than the value obtained during the first brake pressure decreasing control, or,

when said ratio or the adjustment coefficient during the brake pressure decreasing control starts to increase,

is decided to be the completion of the brake pressure decreasing control and the optimum control timing for the ABS.

4. The method of claim 1 wherein the point of time,

when said ratio or the adjustment coefficient, except during the brake pressure decreasing control, becomes just above the value obtained during the first brake pressure decreasing control, or,

when said ratio or the adjustment coefficient during the brake pressure retaining control becomes smaller than the value obtained during the first brake pressure decreasing control and becomes further smaller,

is decided to be the start of brake pressure decreasing control and the optimum control timing for the ABS.

5. The method of claim 1 wherein the point of time, when said ratio or the adjustment coefficient during the brake pressure retaining control becomes greater than the value obtained during the first brake pressure decreasing control, is decided to be the start of brake pressurisation control and the optimum control timing for the ABS.

6. The method of claim 1 wherein the point of time, when said ratio or the adjustment coefficient during the brake pressure retaining control becomes smaller than the value obtained during the first brake pressure decreasing control and is stabilised, is decided to be continuation of brake pressure retention or the start of control of gentle increase of pressure and the optimum control timing for the ABS.

7. The method of claim 1, wherein the timing for the control point is detected by a change in the F - T value after its adjustment or during brake control.

8. The method of claim 1, wherein a threshold value for the F - T value is provided to decide the control point.

9. The method of claim 8, wherein said threshold value is corrected as the road surface friction coefficient changes, thereby detecting the timing for the control point.

**Patentansprüche**

1. Verfahren zum Erfassen des Steuerungspunkts, d. h. des Punkts, bei dem der Bremsdruck von einem Druckerhöhungsbetrieb in einen Druckhalte- oder Druckerniedrigungsbetrieb versetzt wird, nach einer Notbremsung eines Fahrzeugs mit ABS, das einen Spannungssensor (1, 2 in Figur 14) aufweist, dessen Ausgabesignal proportional zur Straßenoberflächen-Reibungskraft F oder zum Straßenoberflächen-Reibungskoeffizienten μ mit einer darin untergemischten Übersprechkomponente, wie dem Bremsdrehmoment T, und proportional zum Bremsdrehmoment T ist, **dadurch gekennzeichnet, daß**

eine Anpassung vom Anstieg des Bremsbeginns vorgenommen wird, so daß erfaßte Signale von F oder μ und T im Verhältnis angepaßt oder im Wert gleichgemacht werden, und

der Steuerungspunkt durch eine Änderung in dem Verhältnis oder in dem Anpassungskoeffizienten bestimmt wird, wobei der Zeitwert des Steuerungspunkts durch die Größe einer Änderung in dem Verhältnis der erfaßten Signale von F oder μ und T oder in dem Anpassungskoeffizienten erfaßt wird.

2. Verfahren nach Anspruch 1, wobei der Zeitpunkt, bei dem das Verhältnis oder der Anpassungskoeffizient sich im wesentlichen zu verändern aufhört, als Steuerungszeitwert bestimmt wird.

3. Verfahren nach Anspruch 1, wobei der Zeitpunkt,

bei dem das Verhältnis oder der Anpassungskoeffizient während einer Bremsdruckerniedrigungssteuerung im wesentlichen gleich groß wird wie der nach Vollendung der vorangehenden Bremsdruckerniedrigungssteuerung erhaltene Wert, oder

bei dem das Verhältnis oder der Anpassungskoeffizient während der Bremsdruckerniedrigungssteuerung größer wird als der während der ersten Bremsdruckerniedrigungssteuerung erhaltene Wert, oder

bei dem das Verhältnis oder der Anpassungskoeffizient während der Bremsdruckerniedrigungssteuerung zu steigen beginnt,

als Vollendung der Bremsdruckerniedrigungssteuerung und optimaler Steuerungszeitwert für das ABS bestimmt wird.

4. Verfahren nach Anspruch 1, wobei der Zeitpunkt,

bei dem das Verhältnis oder der Anpassungskoeffizient unter Ausnahme der Zeit während der Bremsdruckerniedrigungssteuerung gerade größer wird als der während der ersten Bremsdruckerniedrigungssteuerung erhaltene Wert, oder

bei dem das Verhältnis oder der Anpassungskoeffizient während der Bremsdruckhaltesteuerung kleiner wird als der während der ersten Bremsdruckerniedrigungssteuerung erhaltene Wert und weiterhin kleiner wird,

als Beginn der Bremsdruckerniedrigungssteuerung und optimaler Steuerungszeitwert für das ABS bestimmt wird.

5. Verfahren nach Anspruch 1, wobei der Zeitpunkt, bei dem das Verhältnis oder der Anpassungskoeffizient während der Bremsdruckhaltesteuerung größer wird als der während der ersten Bremsdruckerniedrigungssteuerung erhaltene Wert, als Beginn der Bremsdruckbeaufschlagungssteuerung und optimaler Steuerungszeitwert für das ABS bestimmt wird.

6. Verfahren nach Anspruch 1, wobei der Zeitpunkt, bei dem das Verhältnis oder der Anpassungskoeffizient während der Bremsdruckhaltesteuerung. kleiner wird als der während der ersten Bremsdruckerniedrigungssteuerung erhaltene Wert und stabilisiert ist, als Fortführung der Bremsdruckbeibehaltung oder Beginn der Steuerung einer leichten Erhöhung des Drucks und optimaler Steuerungszeitwert für das ABS bestimmt wird.

7. Verfahren nach Anspruch 1, wobei der Zeitwert für den Steuerungspunkt durch eine Änderung in dem F-T-Wert nach dessen Anpassung oder während der Bremssteuerung erfaßt wird.

8. Verfahren nach Anspruch 1, wobei ein Schwellenwert für den F-T-Wert zum Bestimmen des Steuerungspunkts vorgesehen ist.

9. Verfahren nach Anspruch 8, wobei der Schwellenwert bei Änderung des Straßenoberflächen-Reibungskoeffizienten korrigiert wird, wodurch der Zeitwert für den Steuerungspunkt erfaßt wird.

**Revendications**

1. Procédé de détection du point de commande, c'est-à-dire du point où la pression de freinage est changée depuis un mode augmentant la pression jusqu'à un mode maintenant ou diminuant la pression, lors d'un freinage d'urgence d'un véhicule ayant un ABS qui comporte un détecteur de contraintes (1, 2 sur la figure 14) fournissant une sortie proportionnelle à la force de frottement de la surface de route F, ou à un coefficient de frottement de surface de route p, ayant mélangé avec celle-ci une composante de diaphonie, telle qu'un couple de freinage T, et proportionnelle au couple de freinage T, **caractérisé en ce qu'**il consiste à :

faire un ajustement depuis la montée du début de freinage de telle sorte que des signaux détectés constitués de F ou p et T sont ajustés en rapport et rendus égaux en valeur, et déterminer le point de commande par un changement dudit rapport ou du coefficient d'ajustement, l'instant du point de commande étant détecté par la valeur d'un changement du rapport des signaux détectés de F ou µ et T, ou du coefficient d'ajustement.

2. Procédé selon la revendication 1, dans lequel le point dans le temps, où ledit rapport ou le coefficient d'ajustement s'arrête sensiblement de changer, est décidé comme étant l'instant de commande.

3. Procédé selon la revendication 1, dans lequel le point dans le temps,

où ledit rapport, ou le coefficient d'ajustement, pendant une commande diminuant la pression de freinage devient sensiblement égal à la valeur obtenue lors de la fin de la commande diminuant la pression de freinage précédente, ou,

lorsque ledit rapport, ou le coefficient d'ajustement, pendant la commande diminuant la pression de freinage devient plus grand que la valeur obtenue pendant la première commande diminuant la pression de freinage, ou,

lorsque ledit rapport, ou le coefficient d'ajustement, pendant la commande diminuant la pression de freinage commence à augmenter,

est décidé comme étant la fin de la commande diminuant la pression de freinage et l'instant de commande optimal de l'ABS.

4. Procédé selon la revendication 1, dans lequel le point dans le temps,

où ledit rapport, ou coefficient d'ajustement, sauf pendant une commande diminuant la pression de freinage devient juste au-dessus de la valeur obtenue pendant la première commande diminuant la pression de freinage, ou,

lorsque ledit rapport, ou le coefficient d'ajustement, pendant la commande de maintien de pression de freinage devient plus petit que la valeur obtenue pendant la première commande diminuant la pression de freinage et devient encore plus petit,

est déterminé comme étant le début de la commande diminuant la pression de freinage et l'instant de commande optimal de l'ABS.

5. Procédé selon la revendication 1, dans lequel le point dans le temps, où ledit rapport, ou le coefficient d'ajustement, pendant la commande de maintien de pression de freinage devient plus grand que la valeur obtenue pendant la première commande diminuant la pression de freinage, est déterminé comme étant le début d'une commande de mise sous pression des freins et l'instant de commande optimal de l'ABS.

6. Procédé selon la revendication 1, dans lequel le point dans le temps, où ledit rapport, ou le coefficient d'ajustement, pendant la commande de maintien de pression de freinage devient plus petit que la valeur obtenue pendant la première commande diminuant la pression de freinage et est stabilisé, est déterminé comme étant la fin du maintien de pression de freinage ou le début d'une commande d'augmentation douce de pression et l'instant de commande optimal de l'ABS.

7. Procédé selon la revendication 1, dans lequel l'instant du point de commande est détecté par un changement de la valeur F - T après son ajustement ou pendant une commande de freinage.

8. Procédé selon la revendication 1, dans lequel une valeur de seuil pour la valeur F - T est fournie pour déterminer le point de commande.

9. Procédé selon la revendication 8, dans lequel ladite valeur de seuil est corrigée lorsque le coefficient de frottement de la surface de route change, en détectant ainsi l'instant du point de commande.

# Fig. 1

```
                                                              A
  ┌─────────────────────┐ 1     ┌─────────────────────┐
  │ Road surface friction│       │ ω, ω̇ detecting      │
  │ coefficient μ detect-│◄──────│ device              │
  │ ing device          │       │                     │
  └─────────────────────┘       └─────────────────────┘
            │
            │
            ▼           3
  ┌──────────────┐ 2  ┌─────────────────────┐
  │ Brake pedal  │    │                     │
  │ stepping-on  │───►│   Control device    │◄──────────┐
  │ force sensor │    │                     │           │
  └──────────────┘    └─────────────────────┘           │
                                │              ┌─────────────────────┐ 6
                                │              │ Brake liquid pressure│
                                ▼           4  │ detecting device    │
                      ┌─────────────────────┐  └─────────────────────┘
                      │ Brake liquid pressure│           ▲
                      │ generating device   │───────────┘
                      └─────────────────────┘
                                │
                                ▼           5
                      ┌─────────────────────┐
                      │                     │
                      │   Brake device      │
                      │                     │
                      └─────────────────────┘
```

# Fig.2

Road surface friction coefficient μ detect-ing _1_

V̇ detecting device _A1_

Brake pedal stepping-on force sensor _2_

Control device _3_

Brake liquid pressure detecting device _6_

Brake liquid pressure generating device _4_

Brake device _5_

# Fig.3

```
                                  ┌─1                        ┌─A2
        ┌──────────────────────────┐        ┌──────────────────────────┐
        │Road surface friction     │        │ω, ω̇, v̇ detecting         │
        │coefficient μ detect-     │◄───────│device                    │
        │ing                       │        │                          │
        └──────────────────────────┘        └──────────────────────────┘
                     │
           ┌─2       ▼         ┌─3
┌────────────┐  ┌──────────────────────────┐
│Brake pedal │  │                          │
│stepping-on │─►│   Control device         │◄──┐
│force sensor│  │                          │   │        ┌─6
└────────────┘  └──────────────────────────┘   │  ┌──────────────────────────┐
                     │                          │  │Brake liquid pressure     │
                     ▼          ┌─4             │  │detecting device          │
        ┌──────────────────────────┐           │  │                          │
        │Brake liquid pressure     │           │  └──────────────────────────┘
        │generating device         │───────────┘            ▲
        └──────────────────────────┘                        │
                     │
                     ▼          ┌─5
        ┌──────────────────────────┐
        │                          │
        │   Brake device           │
        │                          │
        └──────────────────────────┘
```

# Fig.4

```
                 ┌─────────────────────┐      ┌─────────────────────────┐
              1  │ Road surface friction│      │ ω, ώ detecting          │  A
                 │ coefficient μ detect-│◄─────│ device                  │
                 │ ing                  │      ├─────────────────────────┤  A1
                 └─────────────────────┘       │ V̇ detecting device     │
                                               ├─────────────────────────┤
                                               │ ω, ώ, V̇  detecting      │  A2
                                               │ device                  │
                                               └─────────────────────────┘

┌──────────────┐   3 ┌─────────────────────┐
│ Brake pedal  │     │ ω, ώ, V̇ descriminat-│ B
│ stepping-on  │────►│ ing device          │
│ force sensor │     ├─────────────────────┤
└──────────────┘  2  │ Control device      │◄────┐
                     └─────────────────────┘     │
                                                 │  ┌───────────────────────┐  6
                                                 │  │ Brake liquid pressure │
                                                 │  │ detecting device      │
                     ┌─────────────────────┐  4  │  └───────────────────────┘
                     │ Brake liquid pressure│    │             ▲
                     │ generating device    │────┴─────────────┘
                     └─────────────────────┘
                                                 
                     ┌─────────────────────┐  5
                     │ Brake device        │
                     └─────────────────────┘
```

EP 0 621 162 B1

# Fig.5

Turn on ABS — 110

Discriminate optimum control start point — 111

Detect μ — 112

$\mu_{t-1} = \mu$ — 113

$\mu_P = \mu_{t-1}$ — 114

Increase brake liquid pressure — 115

Detect μ — 116

$\mu_t = \mu$ — 117

$\mu_t - \mu_{t-1} > \mu_c$ ? — 118

No

Yes

$\mu_{t-1} = \mu_t$ — 119

Brake liquid pressure decreasing routine — 123

Brake liquid re-pressurizing routine — 124

# Fig. 6

```
                ┌─────────────────┐
                │      Start      │        1 4 0
                └─────────────────┘
                         │
    ┌────────────────────▼──────────────┐
    │         │                         │
    │  ┌──────┴──────────────┐          │
    │  │   Release brake     │    1 4 2 │
    │  │   liquid pressure   │          │
    │  └─────────┬───────────┘          │
    │            │                      │
    │  ┌─────────▼───────────┐          │
    │  │ Discriminate optimum│    1 4 3 │
    │  │ control start point │          │
    │  └─────────┬───────────┘          │
    │            │                      │
    │  ┌─────────▼───────────┐          │
    │  │     Detect μ        │    I 4 4 │
    │  └─────────┬───────────┘          │
    │            │                      │
    │  ┌─────────▼───────────┐          │
    │  │    μ t-1 = μ        │    1 4 5 │
    │  └─────────┬───────────┘          │
    │            │                      │
    │       1 4 6│                      │
    │  No      ◇ ▼                      │
    └─────── μ t-1 < α · μp ? ──────────┘
                 │
              Yes│
        ┌────────▼────────┐
        │      End        │    1 4 9
        └─────────────────┘
```

# Fig.7

```
                                    ┌─────────────┐
                                    │    Start    │        1 6 0
                                    └──────┬──────┘
                                           │
       ┌───────────────────────────────────│
       │                            ┌───────▼─────────┐
       │                            │  Increase brake │    1 6 2
       │                            │ liquid pressure │
       │                            └────────┬────────┘
       │                            ┌─────────▼─────────┐
       │                            │Discriminate optimum│  1 6 3
       │                            │control start point │
       │                            └─────────┬─────────┘
       │                            ┌─────────▼─────────┐
       │                            │     Detect μ      │    1 6 4
       │                            └─────────┬─────────┘
       │                            ┌─────────▼─────────┐
       │                            │     μt = μ        │    1 6 5
       │                            └─────────┬─────────┘
       │                                      │
       │              No             ┌────────▼────────┐      1 6 6
       │        ┌────────────────────┤  μt > μt-1 ?    │
       │        │                    └────────┬────────┘
       │        │                        Yes  │
       │   ┌────▼────────┐            ┌────────▼────────┐
       │   │  μt-1 = μt  │  1 6 8     │   μt-1 = μt     │    1 6 7
       │   └────┬────────┘            └────────┬────────┘
       └────────┘                     ┌────────▼────────┐
                                      │      End        │    1 7 1
                                      └─────────────────┘
```

22

# Fig.8

```
┌─────────────────┐
│      Start      │
└─────────────────┘
         │
         ▼
┌──────────────────────────────┐
│ Turn off ABS and return      │
│ to normal brake operation    │
└──────────────────────────────┘
         │
         ▼
┌─────────────────┐
│      End        │
└─────────────────┘
```

# Fig.9

200 | Increase brake pressure |

201 ○

202 ◇ Does μ rise rapidly? — No

Yes ↓

203 ○

204 ◇ Is brake pressure increasing? No

Yes ↓

205 ◇ Is μ increasing? — Yes

No ↓

206 | Store MAX_P_HI |
| Store MAX_μ_HI |

207 | Calculate MAX_P_LO |
| Calculate MAX_μ_LO |

208 ○

209 ◇ Press > MAX_P_HI — No

Yes ↓

211 ◇ Press < MAX_P_LO — No

Yes ↓

210 | Decrease pressure |

212 | Increase pressure |

# Fig. 10

200 | Increase brake pressure |

201 ○

202 ◇ Does μ rise rapidly? → No

Yes

203 ○

204 ◇ Is brake pressure increasing? No

Yes

205 ◇ Is μ increasing?

Yes

No

206 | Store MAX_P_HI / Store MAX_μ_HI |

207 | Calculate MAX_P_LO / Calculate MAX_μ_LO |

300 ○

301 | Decrease pressure |

302 ◇ Press > MAX_P_LO

Yes

No

303 ○

304 | Increase pressure |

305 ◇ Press < MAX_P_HI

Yes

No

Fig.11

EP 0 621 162 B1

Fig.12

200 Increase brake pressure

201

202 Does μ rise rapidly? No

Yes

203

204 Is brake pressure increasing? No

Yes

205 Is μ increasing? Yes

No

206 Store MAX_P_HI
Store MAX_μ_HI

207 Calculate MAX_P_LO
Calculate MAX_μ_LO

300

301 Decrease pressure

302 Press > MAX_P_LO  Yes

No

500 μ < MAX_μ_LO  Yes

No

303

304 Increase pressure

305 Press < MAX_P_HI  Yes

No

501 μ < MAX_μ_HI  Yes

No

502 Decrease pressure quickly

27

# Fig.13

200 Increase brake pressure

201 ○

202 Does F rise rapidly? — No

Yes

203 ○

204 Is brake pressure increasing? — No

Yes

205 Is F increasing? — Yes

No

206 Store MAX_P_HI
Store MAX_μ_HI

207 Calculate MAX_P_LO
Calculate MAX_μ_LO

208 ○

209 Press > MAX_P_HI — No

Yes

211 Press < MAX_P_LO — No

Yes

210 Decrease pressure

212 Increase pressure

# Fig.14

```
        1                                                    2
  ┌──────────────────────┐              ┌──────────────────────┐
  │ Road surface friction│              │   Brake torque T     │
  │force F detecting means│             │   detecting means    │
  └──────────┬───────────┘              └──────────┬───────────┘
             │                                     │
             └──────────────┐      ┌───────────────┘
                            ▼      ▼
                    ┌──────────────────────┐         3
                    │   Arithmetic means   │
                    └──────────┬───────────┘
                               │
                               ▼
                    ┌──────────────────────┐         4
                    │   Decision means     │
                    └──────────┬───────────┘
                               │
                               ▼
                    ┌──────────────────────┐         5
                    │  ABS control device  │
                    └──────────────────────┘
```

Fig.15